# EUROPÄISCHE PATENTSCHRIFT

(11) **EP 0 476 291 B1**
(45) Veröffentlichungstag und Bekanntmachung des Hinweises auf die Patenterteilung: **03.04.1996**
(21) Anmeldenummer: 91113254.6
(22) Anmeldetag: 07.08.1991
(51) Int. Cl.: F16H 59/02

(54) **Schaltvorrichtung für ein Kraftfahrzeuggetriebe**
Selector device for a change speed gearing of an automotive vehicle
Dispositif de sélection pour une boîte de changement de vitesses de véhicule automobile

(30) Priorität: 15.09.1990 DE 4029330
(43) Veröffentlichungstag der Anmeldung: 25.03.1992
(73) Patentinhaber: Dr.Ing.h.c. F. Porsche Aktiengesellschaft, D-70435 Stuttgart (DE)
(72) Erfinder: Hillgärtner, Klaus, Dipl.-Ing., W-7251 Wimsheim (DE)

(56) Entgegenhaltungen:
- DE-A- 3 422 262
- DE-A- 3 807 881
- JP-A-59 070 240

## Beschreibung

Die Erfindung betrifft eine Schaltvorrichtung für ein Krafffahrzeuggetriebe nach dem Oberbegriff des Anspruchs 1.

Eine derartige Schaltvorrichtung ist aus DE-A 38 07 881 bekannt. Mit einem Wählhebel, der in einer ersten in Fahrtrichtung des Krafffahrzeugs verlaufenden Schaltgasse verschwenkbar ist, lassen sich die verschiedenen Schaltstellungen eines Automatikgetriebes vorwählen. Über eine senkrechte Quergasse kann der Wählhebel in eine zweite Schaltgasse umgeschaltet werden, in der die verschiedenen Getriebegänge mit dem Wählhebel manuell schaltbar sind. Zur Arretierung der beiden Endlagen der Umschaltbewegung dient eine Federrastierung, die aus einer unten am Wählhebel befestigten Blattfeder und einem mit ihm zusammenwirkenden Rastglied des Wählhebels gebildet ist. Da solche Blatffedern durch herstellungsbedingte Toleranzen unterschiedliche Federkräfte aufweisen, ist zur Erzielung einer gewünschten Anpreßkraft bei Montage ein Nachjustieren erforderlich.

Aus der JP-A-59070240 ist darüberhinaus ein in einer Längsgasse geführter Wählhebel bekannt, an dem ein quer zur Bewegungsrichtung verlaufender Führungsstift angeordnet ist, der mit einer federnd gelagerten Rastkulisse zusammenwirkt. Die Rastkulisse ist dazu in einem Hebelelement ausgebildet, das an seiner einen Seite drehbar an dem Schaltgehäuse für den Wählhebel gelagert und an seiner anderen Seite durch eine Zugfeder gegen den Führungsstift des Wählhebels verspannt ist.

Es ist die Aufgabe der Erfindung eine Schaltvorrichtung zu schaffen, die mit geringem Kostenaufwand eine spielfreie Verrastung des Wählhebels gestattet und ein Nachjustieren bei Montage entbehrlich macht.

Zur Lösung dieser Aufgabe dienen die kennzeichnenden Merkmale des Anspruchs 1. Wenn eine Rastkulisse in einem Rasthebel ausgebildet ist, der am Wählhebel angelenkt und durch eine Zugfeder gegen ein Rastglied des Wählhebels verspannt ist, läßt sich durch Eingreifen des Rastgliedes in die Rastkulisse eine spielfreie Verrastung erzielen. Die Anpreßkraft ist durch Auswahl der Zugfeder exakt vorwählbar und ohne jegliche Nachjustierung bei allen Schaltvorrichtungen immer gleich groß.

Ein Ausführungsbeispiel der Erfindung ist in der Zeichnung dargestellt und wird nachfolgend erläutert.

Es zeigen:
- Fig .1: Schaltvorrichtung im Längsschnitt,

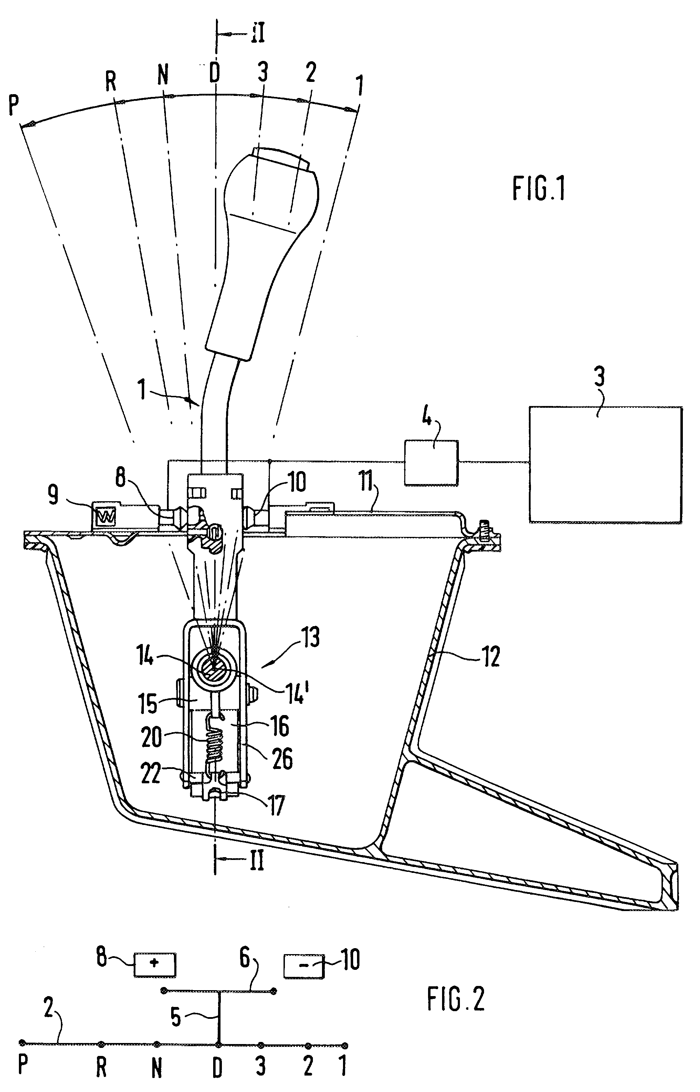

- Fig. 2: Draufsicht auf die Schaltgassen, schematisch dargestellt,

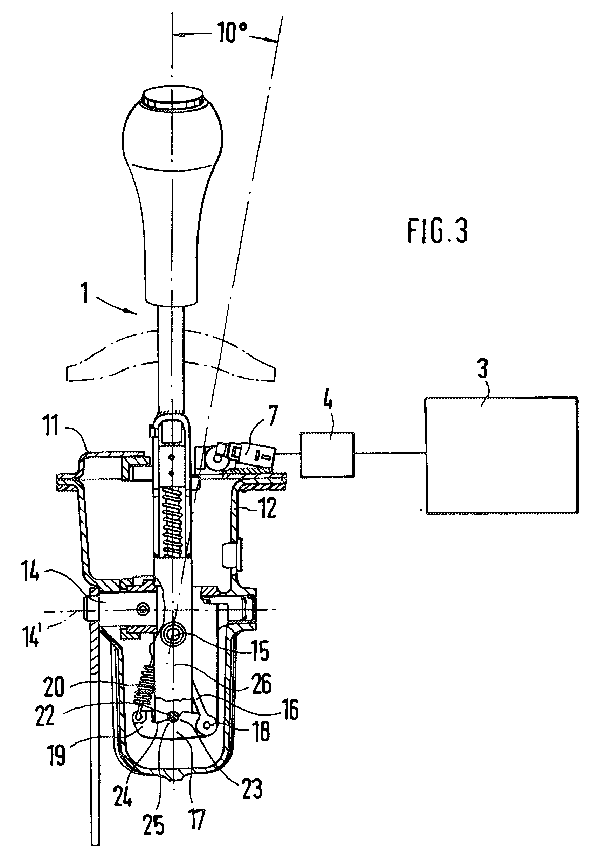

- Fig. 3: Querschnitt der Schaltvorrichtung nach Linie II-II der Fig. 1.

Mit einem Wählhebel 1, der in einer ersten Schaltgasse 2 in Längsrichtung des Kraftfahrzeugs verschwenkbar ist, sind die verschiedenen Stellungen P = Parken, R = Rückwärtsgang, N = Neutral-Null, D = Drive, 3 = 3. Gang, 2 = 2. Gang, 1 = 1. Gang eines Automatikgetriebes 3 vorwählbar. Die Wählstellungen werden durch Sensoren erfaßt und auf ein Steuergerät 4 gegeben, mit dem ein Automatikgetriebe herkömmlicher Bauart elektrohydraulisch steuerbar ist. Aus der Wählstellung D heraus ist der Wählhebel 1 über eine senkrechte Quergasse 5 in eine zur ersten Schaltgasse 2 parallele zweite Schaltgasse 6 umschaltbar. Der Umschaltvorgang wird durch einen Sensor 7 erfaßt, der dabei ein Signal auf das Steuergerät 4 gibt.

Schon bei geringfügigem Verschwenken des Wählhebels 1 in der zweiten Schaltgasse 6 in Fahrtrichtung des Kraftfahrzeugs spricht ein Plus-Sensor 8 an, dessen Signal das Steuergerät 4 veranlaßt, am Automatikgetriebe 3 eine Hochschaltung um einen Gang vorzunehmen. Danach wird der Wählhebel 1 durch eine Feder 9 in die neutrale Mittellage der Schaltgasse 6 zurückgestellt. Beim nochmaligen Antippen am Plus-Sensor 8 erfolgt eine weitere Hochschaltung um einen Gang, falls nicht schon der höchste Gang eingelegt ist. Beim Verschwenken des Wählhebels entgegen der Fahrtrichtung löst ein Minus-Sensor 10 über das Steuergerät 4 am Automatikgetriebe 3 eine Rückschaltung um einen Gang aus.

Beide Schaltgassen 2 und 6 sowie die sie verbindende Quergasse 5 sind in einer Deckplatte 11 eines Hohlrahmens 12 ausgebildet, in dem der Wählhebel gelagert ist. Um die Schwenkbewegungen und die dazu senkrechte Umschaltbewegung ausführen zu können, besitzt der Wählhebel 1 ein Kardangelenk 13 aus zwei senkrecht zueinander angeordneten Lagerbolzen 14 und 15. Der obere Lagerbolzen 14 ist im Hohlrahmen 12 befestigt. Auf ihm ist der Wählhebel 1 mit einer Gelenknabe 16 gelagert. In der Gelenknabe 16 ist der Lagerbolzen 15 befestigt, an dem der Wählhebel 1 zum Umschalten von der einen Schaltgasse 2 zur anderen Schaltgasse 6 gelagert ist. Der hierzu nötige Umschaltwinkel beträgt ca. 10 °.

Für die Funktion beider Getriebearten, einmal als Automatikgetriebe und in der zweiten Schaltgasse 6 als manuell schaltbares Getriebe, ist es wichtig, daß der Wählhebel 1 in beiden Endlagen der Umschaltbewegung sicher und spielfrei arretierbar ist. Hierzu dient ein Rasthebel 17, der an seiner einen Seite 18 an der Unterseite der Gelenknabe 16 gelagert ist, und an seiner anderen Seite 19 mittels einer Zugfeder 20 zur Gelenknabe 16 hin verspannt ist. Die Gelenknabe 16 wird beim Verschwenken des Wählhebels 1 in der ersten Schaltgasse 2 mitverschwenkt. Beim Umschalten in die zweite Schaltgasse 6 wird sie durch den Lagerbolzen 14 festgehalten. In eine Rastkulisse 21 des Rasthebels 17 greift ein Zylinderstift 22 ein, der in den beiden Schenkeln des U-förmigen Wählhebelunterteils 26 befestigt ist. Die Rastkulisse besteht aus zwei halbkreisförmigen Ausnehmungen 23 und 24 und einer mittig zwischen ihnen liegenden Erhebung 25. Die Seitenflanken der Ausnehmungen 23, 24 dienen als Anschläge zur Winkelbegrenzung der Umschaltbewegung. Der Radius der Ausnehmungen 23, 24 ist kleiner als der Radius des Zylinderstifts 22, so daß er spielfrei zwischen den Seitenflanken der Ausnehmungen 23, 24 gehalten ist. Wenn die Gelenknabe 16 und der Rasthebel 17 aus Kunststoff gefertigt sind, kann der Umschaltvorgang und die Rastierung nahezu geräuschlos erfolgen.

## Patentansprüche

1. Schaltvorrichtung für ein Kraftfahrzeuggetriebe, mit einem in einem Kardangelenk gelagerten Wählhebel (1), der zum Vorwählen von Getriebegängen in einer ersten an einem Schaltgehäuse (11, 12) ausgebildeten Schaltgasse (2) verschwenkbar ist und über eine Quergasse (5) in eine zur ersten Schaltgasse (2) parallele zweite Schaltgasse (6) umschaltbar ist, wobei der Wählhebel in beiden Endlagen der Umschaltbewegung mit einem Rastglied (22) in einer federnden Rastkulisse (17) gehalten ist, wobei das Kardangelenk (13) eine Gelenknabe (16) aufweist, die bei Verschwenken des Wählhebels (1) in der ersten Schaltgasse mitverschwenkt, beim Umschalten zwischen den Schaltgassen (2, 6) jedoch festgehalten ist, dadurch gekennzeichnet, daß die Rastkulisse (21) in einem Rasthebel (17) ausgebildet ist, der an seiner einen Seite (18) drehbar in der Gelenknabe (16) gelagert ist und an seiner anderen Seite (19) durch eine Zugfeder (20) gegen ein als Zylinderstift (22) ausgebildetes Rastglied des Wählhebels (1) verspannt ist.

2. Schaltvorrichtung nach Anspruch 1, dadurch gekennzeichnet, daß die Längsachse der Zugfeder (20) senkrecht zur Schwenklagerachse (14') des Wählhebels (1) steht.

3. Schaltvorrichtung nach Anspruch 2, dadurch gekennzeichnet, daß der Zylinderstift (22) in beiden Schenkeln des U-förmig ausgebildeten Wählhebelunterteils (26) befestigt ist.

4. Schaltvorrichtung nach Anspruch 1, dadurch gekennzeichnet, daß die Rastkulisse (21) aus zwei halbkreisförmigen Ausnehmungen (23, 24) und einer mittig zwischen ihnen gelegenen Erhebung (25) besteht.

5. Schaltvorrichtung nach Anspruch 4, dadurch gekennzeichnet, daß die Seitenflanken der Ausnehmungen (23, 24) als Anschläge für die Endstellungen der Umschaltbewegung ausgebildet sind.

6. Schaltvorrichtung nach Anspruch 1, 2 und 3, dadurch gekennzeichnet, daß der Rasthebel (17), die Zugfeder (20) und der Zylinderstift (22) unterhalb seines Kardangelenks (13) angeordnet sind.

7. Schaltvorrichtung nach Anspruch 1, dadurch gekennzeichnet, daß die Gelenknabe (16) und der Rasthebel (17) aus Kunststoff gefertigt sind.

8. Schaltvorrichtung nach Anspruch 1 und 4, dadurch gekennzeichnet, daß der Radius des Zylinderstifts (22) größer ist als der Radius der Ausnehmungen (23, 24).

## Claims

1. A gear-shift device for a motor-vehicle transmission, having a selector lever (1) which is mounted in a universal joint and which is pivotable in a first gear-shift gate (2) formed on a gear-shift housing (11, 12) in order to pre-select gears and can be changed over into a second gear-shift gate (6) parallel to the first gear-shift gate (2) by way of a transverse gate (5), wherein the selector lever is held in both end positions of the change-over movement by a catch member (22) in a resilient slide block (17), wherein the universal joint (13) has a joint hub (16) pivoting jointly in the first gear-shift gate as the selector lever (1) pivots but being held fixed during the change-over between the gear-shift gates (2, 6), **characterized in that** the slide block (21) is formed in a catch lever (17) rotatably mounted on one side (18) thereof in the joint hub (16) and clamped on the other side (19) thereof by a tension spring (20) against a catch member of the selector lever (1) in the form of a cylindrical pin (22).

2. A gear-shift device according to Claim 1, **characterized in that** the longitudinal axis of the tension spring (20) is at right angles to the pivot-bearing axis (14') of the selector lever (1).

3. A gear-shift device according to Claim 2, **characterized in that** the cylindrical pin (22) is secured in the two arms of the U-shaped lower part (26) of the selector lever.

4. A gear-shift device according to Claim 1, **characterized in that** the slide block (21) comprises two semicircular recesses (23, 24) and a raised portion (25) situated centrally therebetween.

5. A gear-shift device according to Claim 4, **characterized in that** the lateral flanks of the recesses (23, 24) are constructed as stops for the end positions of the change-over movement.

6. A gear-shift device according to Claims 1, 2 and 3, **characterized in that** the catch lever (17), the tension spring (20) and the cylindrical pin (22) are arranged below its universal joint (13).

7. A gear-shift device according to Claim 1, **characterized in that** the joint hub (16) and the catch lever (17) are produced from plastics material.

8. A gear-shift device according to Claims 1 and 4, **characterized in that** the radius of the cylindrical pin (22) is greater than the radius of the recesses (23, 24).

## Revendications

1. Dispositif de changement de vitesse pour une boîte de vitesses de véhicule automobile, avec un levier de sélection (1) monté dans une articulation de cardan et susceptible de pivoter, pour effectuer la présélection de vitesses, dans une première ruelle de commutation (2), réalisée sur un carter de changement de vitesses (11, 12), et pouvant passer, par l'intermédiaire d'une ruelle transversale (5), dans une deuxième ruelle de commutation (6) parallèle à la première ruelle de commutation (2), le levier de sélection étant maintenu dans les deux positions finales du déplacement de passage à l'aide d'un organe d'encliquetage (22) dans une coulisse d'encliquetage (17) à effet élastique, l'articulation de cardan (13) présentant un moyeu d'articulation (16) qui pivote conjointement lors du pivotement du levier de sélection (1) dans la première ruelle de commutation, qui est cependant fixé lors du passage entre les ruelles de commutation (2, 6), caractérisé en ce que la coulisse d'encliquetage (21) est réalisée dans un levier d'encliquetage (17) qui est monté, d'un côté (18) de façon à pouvoir tourner dans le moyeu d'articulation (16) et qui est soumis de l'autre côté (19) à la tension d'un ressort de traction (20), contre un organe d'encliquetage, réalisé sous forme de tige cylindrique (22), du levier de sélection (1).

2. Dispositif de changement de vitesse selon la revendication 1, caractérisé en ce que l'axe longitudinal du ressort de traction (20) est perpendiculaire à l'axe de tourillonnement pivotant (14) du levier de sélection (1).

3. Dispositif de changement de vitesse selon la revendication 2, caractérisé en ce que la tige cylindrique (22) est fixée dans les deux branches de la partie inférieure (26) du levier de sélection, qui est réalisée en U.

4. Dispositif de changement de vitesse selon la revendication 1, caractérisé en ce que la coulisse d'encliquetage (21) est constituée de deux évidements (23, 24) en forme de demi-cercles et d'un bossage (25) placé centralement entre ceux-ci.

5. Dispositif de changement de vitesse selon la revendication 4, caractérisé en ce que les flancs latéraux des évidements (23, 24) sont réalisés sous forme de butées pour les positions finales du déplacement de passage de ruelles.

6. Dispositif de changement de vitesse selon la revendication 1, 2 et 3, caractérisé en ce que le levier d'encliquetage (17), le ressort de traction (20) et la tige cylindrique (22) sont disposés au-dessous de son articulation de cardan (13).

7. Dispositif de changement de vitesse selon la revendication 1, caractérisé en ce que le moyeu d'articulation (16) et le levier d'encliquetage (17) sont fabriqués en matière plastique.

8. Dispositif de changement de vitesse selon les revendications et 4, caractérisé en ce que le rayon de la tige cylindrique (22) est supérieur au rayon des évidements (23, 24).
